# EUROPÄISCHE PATENTSCHRIFT

(11) **EP 1 312 901 B1**
(45) Veröffentlichungstag und Bekanntmachung des Hinweises auf die Patenterteilung: **26.04.2006**
(21) Anmeldenummer: 02102676.0
(22) Anmeldetag: 24.09.2001
(51) Int. Cl.: G01G 21/28

(54) **Waage mit Wägeraum**
Scale with weighing place
Balance avec un espace de pesage

(30) Priorität: 04.10.2000 CH 20001958
(43) Veröffentlichungstag der Anmeldung: 21.05.2003
(62) Teilanmeldung aus: 01203643.0
(73) Patentinhaber: Mettler-Toledo GmbH, 8606 Greifensee (CH)
(72) Erfinder: Lüchinger, Paul, 8610, Uster (CH); Fringeli, Eduard, 8606, Bubikon (CH)

(56) Entgegenhaltungen:
- EP-A- 0 234 008
- DE-C- 3 508 873
- US-A- 5 773 767

## Beschreibung

Die Erfindung bezieht sich auf eine Waage mit einem Wägeraum, der teilweise von einem feststehenden Teil der Waage begrenzt ist sowie von mindestens einer Seitenwand, einer Vorderwand und einer Abdeckwand, wovon mindestens eine der Wände zum Öffnen und Schliessen des Wägeraumes mittels einer Führungsvorrichtung bewegbar ist.

Eine solche Waage ist beispielsweise aus der EP-A-0 234 008 bekannt. Dabei handelt es sich um eine Waage mit einer Waagschale und mit einem die Waagschale allseits umschliessenden Wägeraum, mit einem feststehenden Frontglas, je einer seitlich nach hinten verschiebbaren Schiebetür, einer nach hinten verschiebbaren oberen Abdeckung und einer die Schiebetüren mit der oberen Abdeckung verbindenden Halterung, wobei sich die Halterung beim Öffnen und Schliessen der Seitenwände und/oder der Abdeckwand mittels Lager mit diesen mitbewegt und somit den Zugang zum Wägeraum, ohne behindernde Stege an den Seiten vollständig freigeben kann. Auch können die beiden Seitenwände einzeln oder synchron gemeinsam, mit oder ohne die Abdeckwand verschoben werden. Die Verschiebung kann motorisch erfolgen oder von Hand, wobei bei Handbetrieb die zu verschiebenden Scheiben vom Antrieb abgekoppelt werden.

In der EP-A-0 574 668 ist eine Waage offenbart mit einer oberen Abdeckwand eines Windschutzgehäuses, die mit Hilfe einer manuell betätigbaren Verriegelung befestigbar bzw. abnehmbar ist. Nach Abnahme der Abdeckwand ist es möglich sowohl die Vorderwand als auch die Seitenwände zum Zwecke der Reinigung vollständig aus dem Gehäuse zu entfernen. Bei dieser bekannten Ausführung ist die Abdeckwand Teil eines das Windschutzgehäuse zusammenhaltenden Rahmens, der allerdings den darunter liegenden Wänden eine gewisse Stegfreiheit, und damit eine bessere Sicht auf das Innere des Windschutzgehäuses, zugesteht, allerdings für manche Anwendungen noch nicht ganz befriedigend ist. Denn zum einen ist es nicht möglich, auf den oberen Rahmen zu verzichten, zum anderen bedingt diese Ausführung auch eine gewisse Manipulation an den Riegeln, die mit hoher Präzision gefertigt sein müssen, um mit den sie aufnehmenden Ausnehmungen zu fluchten.

Die DE 35 08 873 C1 offenbart eine Waage mit einem Wägeraum, der von einem feststehenden Teil, mindestens einer Seitenwand, einer Vorderwand und einer Abdeckwand begrenzt wird. Mindestens eine der Wände ist zum Öffnen und Schliessen des Wägeraums mittels einer Führungsvorrichtung bewegbar.

In der US 5 773 767 A wird eine Waage beschrieben, die in eine Ladenkasse integriert ist. Die Waage weist ein Gehäuse und eine Plattform zu Aufnahme des Wägeguts auf. Die Plattform kann mittels eines Griffs vom Gehäuse abgehoben werden, damit Schmutz-Ablagerungen um das Gehäuse entfernt werden können.

Der Erfindung liegt die Aufgabe zugrunde, eine einfach zu handhabende Waage vorzuschlagen und eine Möglichkeit der Reinigung zu schaffen, die einen geringen Aufwand erfordert, insbesondere soll der Arbeitsplatz auf dem die Waage aufgestellt ist, einfach und vollständig gereinigt werden können.

Diese Aufgabe wird erfindungsgemäss mit den Merkmalen des Anspruchs 1 gelöst.

Eine Waage mit einem Wägeraum, der teilweise von einem feststehenden Teil der Waage begrenzt ist sowie von mindestens einer Seitenwand, einer Vorderwand und einer Abdeckwand, wovon mindestens eine der Wände zum Öffnen und Schliessen des Wägeraumes mittels einer Führungsvorrichtung bewegbar ist, weist einen dem Anheben der Waage von ihrer Unterlage und/oder dem Tragen der Waage dienender Griff auf. Dabei ist die Führungsvorrichtung für die Abdeckwand zumindest teilweise in den Griff integriert.

Ein solcher Griff dient der verbesserten Handhabung der Waage. Es kann damit beispielsweise die Waage mit einer Hand angehoben werden und die darunter liegende Tischfläche mit der anderen Hand gereinigt werden.

Vorzugsweise ist der Griff am feststehenden Teil der Waage angebracht und ist in einer bevorzugten Ausführungsform an der Oberseite der Waage, insbesondere nahe der Abdeckwand, angeordnet.

In einer vorteilhaften Ausbildung ist der Griff für das Anheben der Waage mit einer Hand ausgestaltet beziehungsweise an der Waage angeordnet.

insbesondere dient der Griff als Schiene für ein Führungselement zum Verschieben der Abdeckwand.

Die Führungsvorrichtung weist in einer vorteilhaften Ausgestaltung einen senkrechten Grundkörper auf, wobei im oberen und unteren Bereich jeweils mindestens eine Zahnstange mit mindestens einem Zahnrad angeordnet ist und vorteilhaft ein senkrechter Grundkörper seitlich gleitend oder mittels Führungsrollen geführt sein kann. Um die Führungseinrichtung der Abdeckwand so kurz wie möglich zu gestalten, wurde eine senkrechte Konstruktion gewählt. Dabei ist das Führungselement seitlich gleitend oder mittels Führungsrollen in der Führungsvorrichtung verkantungsfrei geführt.

In einer besonders vorteilhaften Weiterbildung der Waage ist eine Halterung der Abdeckwand in die Führungsvorrichtung integriert ist, wobei diese die Abdeckwand mittels eines durch eine einfache, auf die Abdeckwand und/oder die Halterung einwirkende Betätigung ver- und entriegelbaren Formschlusses hält beziehungsweise freigibt.

Für eine weitere vorteilhafte Ausführungsform der erfindungsgemässen Waage ist am Griff ein Kupplungshebel, für das An- und Abkuppeln der Abdeckwand an und von einem der Bewegung der mindestens einen bewegbaren Wand dienenden motorischen Antrieb, angeordnet.

Weitere Einzelheiten der Erfindung ergeben sich an Hand der nachfolgenden Beschreibung von in den Zeichnungen schematisch dargestellten Ausführungsbeispielen. Es zeigen:
- Fig. 1: eine erfindungsgemässe Waage in Perspektive von vorne,
- Fig. 2: die Waage in einer Perspektive im Sinne des Pfeils II der Fig. 1, jedoch bei abgenommenem Gehäuse,
- Fig. 3: eine Schnittansicht der Führung und des Antriebes der Abdeckwand,
- Fig. 4: eine Seitenansicht des Antriebes für die Abdeckwand.

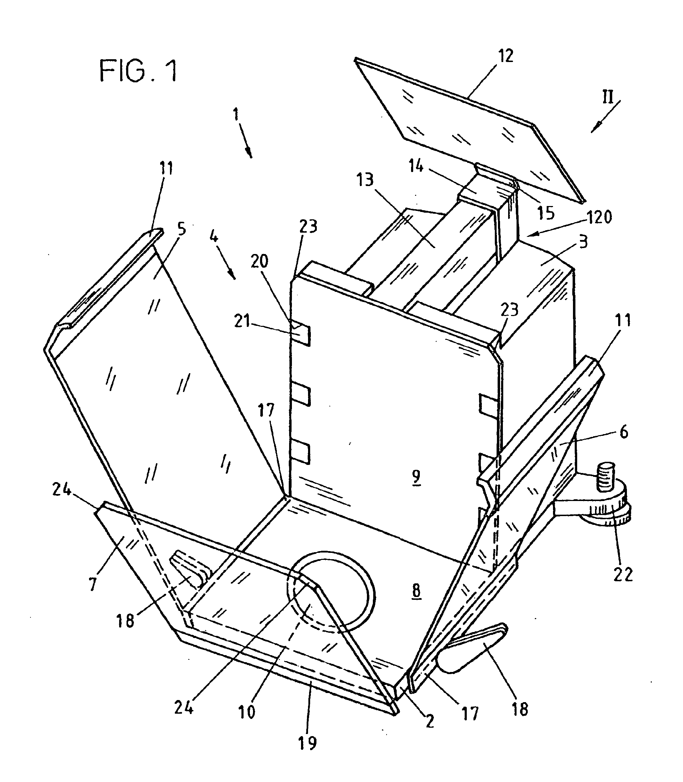

Eine Waage 1 gemäss Figur 1 besteht aus einem, die Rückwand 9 und den Boden 8 des Wägeraums 4 bildenden feststehenden Teil, welcher sich aus einem einen Teil der Wägetechnik enthaltenden Bodenraum 2 und einem im wesentlichen die Antriebsmechanik enthaltenden Gehäuse 3 zusammensetzt, sowie dem Wägeraum 4. Der Wägeraum 4 wird weiterhin, als Windschutz dienend, von den Seitenwänden 5, 6 der Vorderwand 7 und der Abdeckwand 12 eingeschlossen. Der Boden 8 enthält eine Durchführung für den Träger der Waagschale 10. Allerdings kann die Waagschale auch auf einem L-förmigen Träger, der an einer aus der Rückwand des Wägeraums ragenden Koppelanordnung angebracht ist, aufliegen, wie dies in der EP 1 195 586 A1 beschrieben ist. Ebenso sind die verschiedenen in der genannten Schrift beschriebenen Ausgestaltungen der Waagschale und/oder der Merkmale des Wägeraums auch für die hier beschriebene Waage anwendbar.

Die Waage 1 steht vorzugsweise auf drei Füssen 22.

Die Seitenwände 5, 6, die Vorderwand 7 und die Abdeckwand 12 bestehen aus durchsichtigem Material, vorzugsweise aus Glas. Eine Ausführung aus gehärtetem Glas ist ebenfalls möglich, insbesondere für Anwendungen, bei welchen es gilt, die Sicherheit hinsichtlich des Umgangs in einer rauen Umgebung zu erhöhen oder die Handhabung, beispielsweise durch das Reinigen in einer Maschine, zu verbessem.

Die Seitenwände 5, 6 und die Abdeckwand 12 sind mittels eines Antriebs, beispielsweise eines Seilzugantriebs, zum Öffnen und Schliessen des Wägeraums bewegbar. Die Seitenwände 5, 6 und die Abdeckwand 12 sind jeweils lösbar an einer Führungsvorrichtung 17,120 mit Hilfe von in die Führungsvorrichtungen 17,120 integrierten Halterungen befestigt. Die Vorderwand 7 ist, ebenfalls lösbar, an einer Halterung 19 befestigt.

Durch eine leichte Schwenkbewegung sind die Seitenwände 5, 6, die Vorderwand 7 und die Abdeckwand 12 in einfacher Weise zum Reinigen aus ihren Halterungen zu entfemen.

In ihrer Offenstellung umschliessen die Seitenwände 5, 6 sowie die Abdeckwand 12 das Gehäuse 3. Dies ist deshalb möglich, weil das Gehäuse 3 in seiner Breite und seiner Höhe kleiner ausgestaltet ist als der Wägeraum 4.

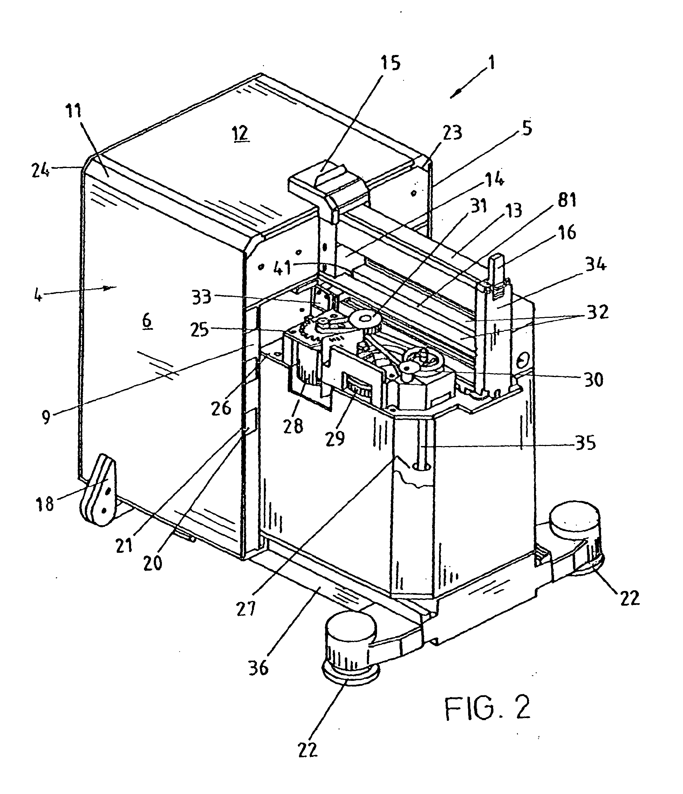

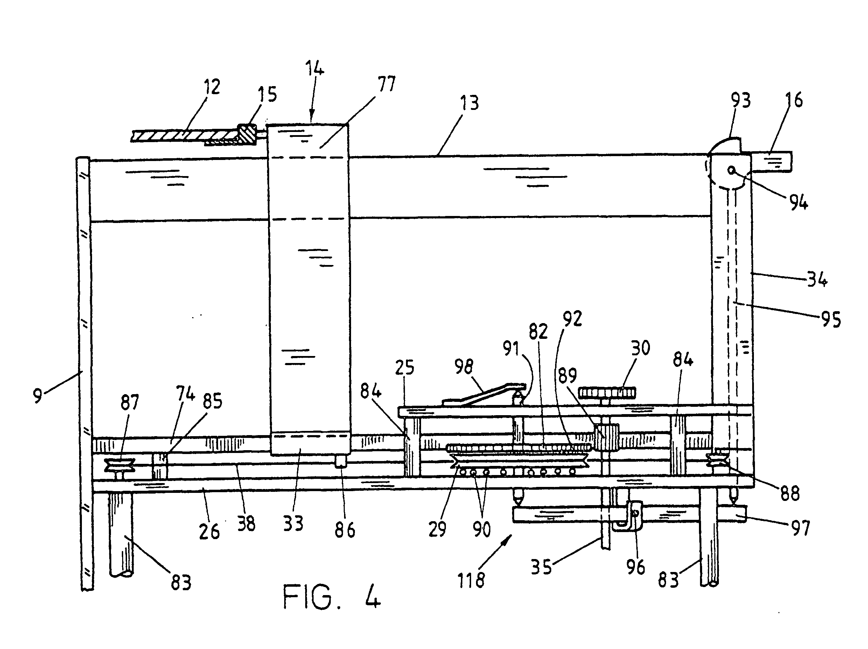

Die Führungsvorrichtungen 17, 120 der Seitenwände 5, 6, sowie der Abdeckwand 12 sind mit Kupplungselementen (in Figur 1 nicht sichtbar) versehen, die der Verbindung der Seitenwände 5, 6 und der Abdeckwand 12 mit den Seilzügen eines Antriebs dienen. Jede Seitenwand 5, 6 ist separat mit einer Kupplungsbetätigung 18 versehen, ebenso die Abdeckwand 12 (in Figur 1 nicht sichtbar, siehe Figuren 2 und 4). Auf diese Weise sind alle denkbaren Kombinationen: einzeln, teilweise oder alle zusammen des Schliessens und Öffnens der Seitenwände 5, 6 und der Abdeckwand 12 möglich.

Am oberen Ende des Gehäuses 3 besitzt die Waage 1 einen Griff 13. Neben der Tragefunktion hat der Griff 13 noch die Funktion einer Führungsschiene für das Öffnen und Schliessen der Abdeckwand 12. Über diese Schiene wird ein Führungselement 14 der Führungsvorrichtung 120 geführt, wobei die Halterung 15 der Abdeckwand 12 mit dem Führungselement 14 verbunden ist. Wie oben schon beschrieben, ist die Halterung 15 für die Abdeckwand 12 derart ausgebildet, dass die Abdeckwand 12 durch eine einfache Schwenkbewegung, beispielsweise zum Reinigen, abgetrennt werden kann.

An der Oberkante der Seitenwände 5, 6 sind für deren Halten in Rastverschlüssen (in Figur 1 nicht dargestellt) nach innen geneigte Rahmenleisten 11 vorgesehen, die an den abgeschrägten oberen Ecken 23, 24 der Vorderwand 7 und der Rückwand 9 anliegen. Die abgewinkelten Rahmenleisten 11 können andere obere Endkanten der Seitenwände 5, 6, gegebenenfalls aber auch der Abdeckwand 12, derart überdecken, dass sie für die äussere Luft eine Art Labyrinthdichtung bilden, so dass der Zutritt von Zugluft zum Inneren des Wägeraumes 4 über die Funktion des Windschutzes hinaus weiter erschwert wird. Im übrigen können die Rahmenleisten 11 aus durchsichtigem Material gefertigt sein.

Wie bereits oben erwähnt, überragt die Rückwand 9 des Wägeraumes 4 sowohl in ihrer Breite als auch in der Höhe das Gehäuse 3. Dadurch bietet sich die Möglichkeit von Aussparungen 20 in der Rückwand 9, die sowohl seitlich aber auch oben angeordnet sein können. Diese Aussparungen 20 sind mit auswechselbaren Clips 21 zum Verschliessen der Aussparungen 20 versehen. Beispielsweise können ein oder mehrere Clips 21 aus einer oder mehreren Aussparungen 20 entfernt werden, um irgendwelche Versorgungen, beispielsweise elektrische Zuleitungen und/oder Schläuche für zu wägende Flüssigkeitszugaben, hindurchzuführen. Damit können innerhalb des Wägeraumes Experimente unter Beobachtung der Gewichtsveränderung durchgeführt werden, ohne zusätzliches Öffnen des Wägeraumes 4, was Fehlmessungen verursachen könnte. Selbstverständlich sind solche Aussparungen 20 auch an den Seitenwänden 5 oder 6, der Vorderwand 7 und/oder der Abdeckwand 12 denkbar.

Die Figur 2 zeigt die Waage 1 aus der Blickrichtung des Pfeils II der Figur 1, jedoch nach teilweiser Wegnahme des Gehäuses 3 und bei geschlossenem Wägeraum 4. Die Seitenwände 5, 6 sowie die Abdeckwand 12 sind einzeln oder auch gemeinsam von Hand oder auch motorisch, vorzugsweise mit Hilfe eines einzigen Motors 28 verschiebbar, so dass der Wägeraum 4 an einer beliebigen Stelle geöffnet oder verschlossen werden kann. Insbesondere ist in Figur 2 der Antrieb für das Verschieben der Wände 5, 6, 12 gezeigt, welcher sich auf die drei Ebenen 25, 26, 27 und eine weitere Ebene 36 erstreckt. In diesem Beispiel handelt es sich um einen Seilantrieb, wobei ein hier nicht sichtbarer oberer Seilzug auf der Ebene 26 der Betätigung der Abdeckwand 12 und ein ebenfalls hier nicht sichtbarer unterer Seilzug auf der Ebene 36 der Betätigung der Seitenwände 5, 6 dient.

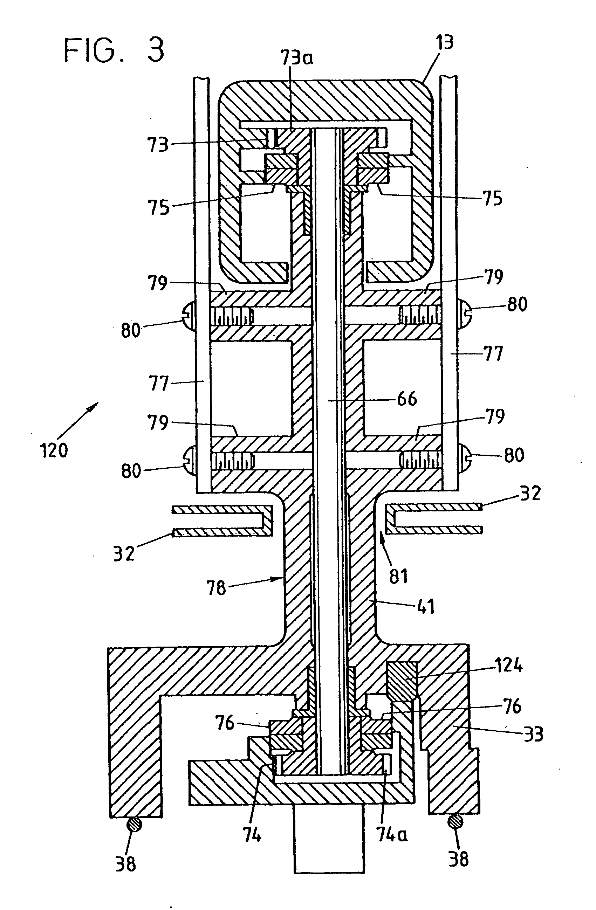

Weiterhin ist in Figur 2 der Führungsmechanismus der Abdeckwand 12 gezeigt. Der Griff 13 dient gleichzeitig als Schiene für das Führungselement 14 für die Halterung 15 der Abdeckwand 12, die entlang dem Griff 13 geführt wird. Der Griff 13 ist über eine Leiste 34 mit der Ebene 26 verbunden. Zwischen der Leiste 34 und der Rückseite der Rückwand 9 sind zwei Halteleisten 32 für das in Figur 2 entfernte Gehäuse 3 angeordnet. Unterhalb dieser Halteleisten 32 ist ein unterer Bereich 33 des Führungselements 14 vorgesehen, welches über einen schmalen Steg 41 mit der Halterung 15 für die Abdeckwand 12 verbunden ist. (Den konstruktiven Zusammenhang zeigt die Figur 3).

Mit dem Bezugszeichen 16 ist der Hebel zur Betätigung der Kupplung für die Abdeckwand 12 bezeichnet. Damit ist es möglich die antriebsmässige Verbindung der Abdeckwand 12 von dem oberen Seilzug 38 (siehe Figur 4) zu trennen oder wieder herzustellen.

In der Schnittzeichnung der Figur 3 ist die Führungsvorrichtung 120 der in Figur 3 nicht dargestellten Abdeckwand 12 beschrieben. An einem Grundkörper 78 des Führungselements 14 sind Stege 79 angebracht, an denen in der Zeichnung die unterbrochen dargestellten Platten 77 mittels Schrauben 80 befestigt sind, die wiederum im oberen Bereich mit der nicht dargestellten Halterung 15 für die Abdeckwand 12 verbunden sind. Im oberen Bereich wird der Grundkörper 78 von dem Griff 13 umgeben. Im Inneren des Griffes 13 ist linksseitig der Mittellinie eine obere Zahnstange 73 vorgesehen, entlang der ein oberes Zahnrad 73a geführt wird. Eine ähnliche Konstruktion ist im unteren Bereich 33 des Führungselements 14 vorgesehen mit der unteren Zahnstange 74 und dem unteren Zahnrad 74a. Die Zahnräder 73a und 74a sind über eine senkrecht angeordnete Welle 66 verbunden. Um ein seitliches Spiel zu vermeiden, sind sowohl oben als auch unten Führungsrollen 75 bzw. 76, bestehend aus jeweils einem Doppelrollensystem, angeordnet, so dass das Führungselement 14 stets gerade und verkantungsfrei entlang dem Griff 13 fahrbar ist. Die vertikale Kraft wird über ein Gleitelement 124 abgestützt. Dies kann aber auch über eine oder mehrere Rollen geschehen. Der untere Bereich 33 des Führungselements 14 ist an seiner Unterseite mit dem oberen Seilzug 38 verbunden. Über den Seilzug 38 wird über den Antrieb der Grundkörper 78 entlang der Zahnstangen 73 und 74 bewegt.

Mit dem Bezugszeichen 32 sind die Halteleisten für das Gehäuse 3 bezeichnet. Die Halteleisten 32 bilden einen Schlitz 81, in dem sich der Steg 41 des Grundkörpers 78 bewegt (siehe auch Figur 2). Der Schlitz 81 kann zusätzlich mit Klapplamellen, Dichtungslippen oder Bürsten gegen das Eindringen von Staub etc. ins Innere des Gehäuses 3 abgedichtet sein.

Die Figur 4 zeigt eine Seitenansicht des Antriebes für die Abdeckwand 12, gemäss den Figuren 2 und 3. Der Antriebsbereich weist die Ebenen 25 und 26 entsprechend der Figur 2 auf, allerdings ohne Darstellung des Motors 28. Am hinteren Ende des Griffes 13 befindet sich der Kupplungshebel 16, der eine im Bereich von Getrieberädem 29, 82 befindliche Kupplung 118 (nicht im Detail gezeigt) steuert, um wahlweise die Abdeckwand 12 vom Motor 28 an- bzw. von ihm abzukuppeln. Der Motor 28 kann entweder ein drehrichtungsumkehrbarer Motor sein oder es ist ein Getriebe für die Änderung der Drehrichtung vorgesehen. In letzterem Falle kann dieses Getriebe entweder von Hand aus umschaltbar sein oder von endschalterähnlichen Betätigungsgliedern, die jeweils beim Erreichen einer zu definierenden Endstellung eine Umschaltung vornimmt. Mit 30 ist ein Zahnriemenrad bezeichnet, welches seinen Antrieb vom Motor 28 erhält und auf die Getrieberäder 89 und 82 überträgt.

Es ist ersichtlich, wie die Ebene 26 auf langen Säulen 83 und die Ebene 25 ihrerseits auf der Ebene 26 befestigten kurzen Säulen 84 ruht. Auch die untere schematisch dargestellte Zahnstange 74 kann auf der Ebene 26 über Säulen 85 (nur eine ist zu sehen) abgestützt sein. Im übrigen aber bilden die untere Zahnstange 74, die im Griff 13 enthaltene obere Zahnstange 73 (siehe Figur 3) und die Leiste 34 mit der Rückwand 9 eine Art steifer Rahmen, der die Abdeckwand 12 verkantungsfrei führt. Die Abdeckwand 12 ist über die Halterung 15 für die Abdeckwand 12 verbunden, die wiederum über die Platten 77 des Führungselements 14 an dem nicht sichtbaren Grundkörper 78 befestigt sind, wie es bei der Figur 2 beschrieben wurde. Der untere Bereich 33 des Führungselements 14 wird entlang der unteren Zahnstange 74 geführt, an dessen Unterseite ein stiftartiges Verbindungselement 86 vorragt. An diesem Verbindungselement 86 ist ein oberer Seilzug 38 befestigt, der um die als Seilrollen ausgebildeten Getrieberäder 29, 87 und 88 geführt ist, d.h. er ist um das als Antriebsscheibe dienende Seilrad 29 in bekannter Weise herumgeführt. Das Seilrad 29 kann beispielsweise auf Kugeln 90 gelagert sein.

Aus Figur 2 ist das vom Motor 28 über einen Zahnriemen angetriebene Zahnriemenrad 30 ersichtlich, das gemäss Figur 4 mit dem Getrieberad 89 über die Welle 35 verbunden ist. Die Welle 35 ist so ausgebildet, dass sie für Montage und Demontage auf einfache Weise von oben eingesetzt werden kann. Das Zahnrad 89 greift in ein in vertikaler Richtung höhenverstellbares, bereits an Hand der Figur 2 erwähntes Getrieberad 82, welches an einer Welle 91 befestigt ist. Das Getrieberad 82 dient dazu, je nach seiner Höhenlage mit dem Seilrad 29 zu kuppeln oder von ihm abgekuppelt zu sein. Die Kupplung kann in an sich bekannter Weise und beliebig ausgebildet werden, wird jedoch vorzugsweise über eine als Kupplungseinrichtung dienende Rampenkonstruktion 92 mit einer Rastfeder erfolgen.

Um nun wahlweise das Seilrad 29 vom motorischen Antrieb 28 und 82 zu lösen und so die Abdeckwand 12 von Hand aus verschieben zu können oder bei einer Verschiebung etwa der Seitenwände 5, 6 die Abdeckwand 12 nicht zwangsweise mitzuverschieben, ist der schon an Hand der Figur 2 erwähnte Kupplungshebel 16 zur Bedienung der Abdeckwandkupplung 118 vorgesehen. Der Kupplungshebel 16 ist mit einer Exzentemocke 93 verbunden, die mit dem Hebel 16 um eine Hebelachse 94 an der Leiste 34 schwenkbar ist. In der Leiste 34 ist ein Stössel 95 auf- und ab verschiebbar geführt. Dieser Stössel 95 liegt unter dem Druck eines um eine Achse 96 verschwenkbaren zweiarmigen Kipphebels 97 an der Exzentemocke 93 an.

Das andere Ende des Kipphebels 97 lagert die Welle 91, an der das Getrieberad 82 befestigt ist. An der Oberseite dieser Welle 91 liegt eine an der Ebene 25 befestigte Feder 98 an. Somit drückt die Feder 98 die Welle 91 nach unten auf den Kipphebel 97. Der wiederum erfährt dadurch ein Drehmoment im Gegensinne des Uhrzeigers um die Achse 96 und drückt somit auf den Stössel 95. Wird daher der Kupplungshebel 16 im Gegensinne des Uhrzeigers verschwenkt, so drückt die Exzentemocke 93 den Stössel 95 entgegen dem Druck der Feder 98 nach unten. Dabei schwenkt der zweiarmige Kipphebel 97 leicht im Uhrzeigersinn und hebt damit an seinem anderen Ende die Welle 91 samt dem Zahnrad 82 hoch, womit die Kupplung zwischen diesem Zahnrad 82 und dem Seilrad 29 gelöst wird. Das Zahnrad 82 bleibt bei dieser Bewegung natürlich weiterhin im Eingriff mit dem Zahnrad 89 zum Antrieb des oberen Seilzuges 38. Die hier beschriebene Betätigung der Kupplungseinrichtung von Hand kann selbstverständlich auch automatisch erfolgen, beispielsweise mittels eines elektromagnetischen Stellglieds.

## Patentansprüche

1. Waage (1) mit einem Wägeraum (4), der teilweise von einem feststehenden Teil (8, 9) der Waage begrenzt ist sowie von mindestens einer Seitenwand (5, 6), einer Vorderwand (7) und einer Abdeckwand (12) wovon mindestens eine der Wände (5, 6, 12) zum Öffnen und Schliessen des Wägeraumes (4) mittels einer Führungsvorrichtung (17, 120) bewegbar ist, **dadurch gekennzeichnet, dass** die Waage (1) einen dem Anheben der Waage (1) von ihrer Unterlage und/oder dem Tragen der Waage (1) dienenden Griff (13) aufweist und dass die Führungsvorrichtung (120) für die Abdeckwand (12) zumindest teilweise in den Griff (13) integriert ist.

2. Waage (1) nach Anspruch 1, **dadurch gekennzeichnet, dass** der Griff (13) am feststehenden Teil (8, 9) der Waage (1) angebracht ist.

3. Waage (1) nach Anspruch 1 oder 2, **dadurch gekennzeichnet, dass** der Griff (13) an der Oberseite der Waage (1), insbesondere nahe der Abdeckwand (12), angeordnet ist.

4. Waage (1) nach Anspruch 1, 2 oder 3, **dadurch gekennzeichnet, dass** der Griff (13) für das Anheben der Waage (1) mit einer Hand ausgestaltet beziehungsweise an der Waage (1) angeordnet ist.

5. Waage (1) nach einem der Ansprüche 1 bis 4, **dadurch gekennzeichnet, dass** der Griff (13) als Schiene für ein Führungselement (14) der Führungsvorrichtung (120) der Abdeckwand (12) ausgebildet ist.

6. Waage (1) nach Anspruch 5, **dadurch gekennzeichnet, dass** das Führungselement (14) einen senkrechten Grundkörper (78) aufweist, wobei im oberen und unteren Bereich der Führungsvorrichtung (120) jeweils mindestens eine Zahnstange (73, 74) vorgesehen ist, welche mit jeweils mindestens einem an einer senkrechten Welle (66) angeordneten Zahnrad (73a, 74a) des Führungselements (14) im Eingriff ist.

7. Waage (1) nach Anspruch 5 oder 6, **dadurch gekennzeichnet, dass** das Führungselement (14) seitlich gleitend oder mittels Führungsrollen (75, 76) in der Führungsvorrichtung (120) verkantungsfrei geführt ist.

8. Waage (1) nach einem der Ansprüche 1 bis 7, **dadurch gekennzeichnet, dass** eine Halterung (15) der Abdeckwand (12) in die Führungsvorrichtung integriert ist, wobei diese die Abdeckwand (12) mittels eines durch eine einfache, auf die Abdeckwand (12) und/oder die Halterung (15) einwirkende Betätigung ver- und entriegelbaren Formschlusses hält beziehungsweise freigibt.

9. Waage (1) nach einem der Ansprüche 1 bis 8, **dadurch gekennzeichnet, dass** am Griff (13) ein Kupplungshebel (16), für das An- und Abkuppeln der Abdeckwand (12) an und von einem der Bewegung der mindestens einen bewegbaren Wand (5, 6, 12) dienenden motorischen Antrieb, angeordnet ist.

## Claims

1. Balance (1) with a weighing compartment (4) that is partially delimited by a stationary part (8, 9) of the balance as well as by at least one side wall panel (5, 6), a front wall panel (7), and a top cover panel (12); wherein at least one of said panels is slidable by means of a guiding device (17, 120) to open and close the weighing compartment (4), **characterized in that** the balance comprises a handle (13) serving to lift the balance (1) off of its support surface and/or to carry the balance (1) and that the guiding device (120) of the top cover panel (12) is at least partially integrated in the handle(13).

2. Balance (1) in accordance with claim 1, **characterized in that** the handle (13) is attached to the stationary part (8, 9) of the balance (1) .

3. Balance (1) in accordance with claim 1 or 2, **characterized in that** the handle (13) is arranged on the topside of the balance (1), in particular close to the top cover panel (12) .

4. Balance (1) in accordance with one of the claims 1, 2 or 3, **characterized in that** the handle (13) is designed or respectively is arranged on the balance (1) so as to allow lifting the balance (1) with one hand.

5. Balance (1) in accordance with one of the claims 1 to 4, **characterized in that** the handle (13) is designed as a rail for a guide element (14) of the guiding device (120) of the top cover panel (12) .

6. Balance (1) in accordance with claim 5, **characterized in that** the guide element (14) comprises a vertical body (78), wherein at least one gear rack (73, 74) is provided, respectively, in each of the upper part and the lower part of the guiding device (120), each of which gear racks (73, 74) is in meshing engagement with one of gears (73a, 74a) which are arranged on a vertical shaft (66).

7. Balance (1) in accordance with claim 5 or 6, **characterized in that** the guide element (14) is laterally guided in the guiding device (120) by a gliding constraint or by guide rollers (75, 76) in a way that prevents jamming.

8. Balance (1) in accordance with one of the claims 1 to 7, **characterized in that** a holder element (15) for the top cover panel (12) is integrated in the guiding device, wherein said holder element holds and releases the top cover panel (12) by means of a form-locking engagement which can be locked and unlocked by a simple actuation directed at the top cover panel (12) and/or the holder element (15).

9. Balance (1) in accordance with one of the claims 1 to 8, **characterized in that** a clutch lever (16) is arranged on the handle (13), said clutch lever (16) allowing the top cover panel (12) to be coupled to and to be uncoupled from a motorized drive mechanism that serves to move the at least one slidable panel (5, 6, 12).

## Revendications

1. Balance (1) comprenant un espace de pesée (4), qui est délimité partiellement par une partie (8, 9) fixe de la balance ainsi que par au moins une paroi latérale (5, 6), une paroi avant (7) et une paroi de recouvrement (12), dont au moins l'une des parois (5, 6, 12) peut être déplacée au moyen d'un dispositif de guidage (17, 120) pour l'ouverture et la fermeture de l'espace de pesée (4), **caractérisée en ce que** la balance (1) présente une poignée (13) servant au soulèvement de la balance (1) de son support et/ou au port de la balance (1) et **en ce que** le dispositif de guidage (120) pour la paroi de recouvrement (12) est intégré au moins partiellement dans la poignée (13).

2. Balance (1) selon la revendication 1, **caractérisée en ce que** la poignée (13) est placée sur la partie (8, 9) fixe de la balance (1) .

3. Balance (1) selon la revendication 1 ou 2, **caractérisée en ce que** la poignée (13) est disposée sur le côté supérieur de la balance (1), en particulier à proximité de la paroi de recouvrement (12) .

4. Balance (1) selon la revendication 1, 2 ou 3, **caractérisée en ce que** la poignée (13) est formée ou respectivement est disposée sur la balance (1) pour le soulèvement de la balance (1) d'une main.

5. Balance (1) selon l'une quelconque des revendications 1 à 4, **caractérisée en ce que** la poignée (13) est conçue comme rail pour un élément de guidage (14) du dispositif de guidage (120) de la paroi de recouvrement (12).

6. Balance (1) selon la revendication 5, **caractérisée en ce que** l'élément de guidage (14) présente un corps de base (78) vertical, une crémaillère (73, 74), qui est en prise avec respectivement au moins une roue dentée (73a, 74a), disposée sur un arbre (66) vertical, de l'élément de guidage (14), étant prévue dans la zone supérieure et la zone inférieure du dispositif de guidage (120).

7. Balance (1) selon la revendication 5 ou 6, **caractérisée en ce que** l'élément de guidage (14) est guidé en glissant sur le côté ou au moyen de galets de guidage (75, 76) dans le dispositif de guidage (120) sans blocage.

8. Balance (1) selon l'une quelconque des revendications 1 à 7, **caractérisée en ce qu'**une fixation (15) de la paroi de recouvrement (12) est intégrée dans le dispositif de guidage, celui-ci maintenant ou libérant la paroi de recouvrement (12) au moyen d'une liaison mécanique par conjugaison de forme pouvant être verrouillée et déverrouillée par une commande simple et agissant sur la paroi de recouvrement (12) et/ou la fixation (15).

9. Balance (1) selon l'une quelconque des revendications 1 à 8, **caractérisée en ce qu'**un levier de couplage (16), pour le couplage ou le découplage de la paroi de recouvrement (12) sur un entraînement moteur servant au déplacement de la au moins une paroi déplaçable (5, 6, 12), est disposé sur la poignée (13).
